**Europäisches Patentamt**

**European Patent Office**

**Office européen des brevets**

(19)

(11) Numéro de publication: **0 058 283 B1**

# FASCICULE DE BREVET EUROPEEN

(12)

(45) Date de publication du fascicule du brevet:
30.05.84

(21) Numéro de dépôt: 81402032.7

(22) Date de dépôt: 18.12.81

(51) Int. Cl.³: **C 04 B 37/02, H 01 P 1/383**

(54) **Dispositif hyperfréquence à ferrites et utilisation d'un tel dispositif.**

(30) Priorité: 13.01.81 FR 8100472

(43) Date de publication de la demande:
25.08.82 Bulletin 82/34

(45) Mention de la délivrance du brevet:
30.05.84 Bulletin 84/22

(84) Etats contractants désignés:
DE GB IT NL SE

(56) Documents cités:
FR - A - 2 443 750
US - A - 3 662 291
US - A - 3 940 051

(73) Titulaire: **THOMSON-CSF, 173, Boulevard Haussmann, F-75379 Paris Cedex 08 (FR)**

(72) Inventeur: **Forterre, Gérard, THOMSON-CSF SCPI 173, bld Haussmann, F-75360 Paris Cedex 08 (FR)**
Inventeur: **Hartemann, Pierre, THOMSON-CSF SCPI 173, bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

## Description

La présente invention concerne un dispositif hyperfréquence à ferrites devant supporter de fortes puissances moyennes, et dans lequel chaque pièce en ferrite est fixée sur une pièce métallique constituant une pièce polaire du circuit de polarisation magnétique du dispositif hyperfréquence.

D'une façon générale, on sait que le comportement en fonction de la puissance d'un dispositif hyperfréquence à ferrites dépend de la température finalement atteinte par les pièces en ferrite. Ainsi, pour réaliser un dispositif hyperfréquence de forte puissance, tel que par exemple un circulateur du type à jonction Y à trois portes, on a recours à différentes démarches consistant à:

– réduire les pertes de la pièce en ferrite;
– réduire les gradients thermiques dans la pièce en ferrite;
– réduire la résistance thermique entre la pièce en ferrite et la paroi métallique dudit dispositif.

Les deux premières démarches relèvent du mode de fonctionnement du dispositif qu'il faut adapter aux contraintes dues à la puissance.

La dernière démarche est purement technologique et a déjà fait l'objet de nombreux essais. A cet effet, la nature du moyen utilisé servant à fixer la pièce en ferrite sur la paroi métallique doit satisfaire aux exigences suivantes:

– ne pas présenter de pertes en hyperfréquence ou ne pas augmenter les pertes à la surface de la pièce en ferrite;
– avoir la plus faible résistance thermique possible;
– supporter de forts gradients thermiques;
– ne pas introduire de contraintes dans la pièce en ferrite, de façon a ne pas casser cette dernière lors de l'application de la puissance.

Dans la domaine des dispositifs hyperfréquences à ferrites, on connaît différentes techniques permettant de fixer une pièce en ferrite sur une pièce métallique. L'une d'entre elles consiste à utiliser simplement une colle isolante, telle que par exemple de l'araldite (marque déposée) fluide. Cependant, une telle colle est cassante, présente une mauvaise conductibilité thermique, et polymérise difficilement en très faible épaisseur.

Une autre technique connue de fixation consiste à métalliser la face de fixation de la pièce en ferrite par dépôt en couche mince de métaux, tels que par exemple le cuivre et l'or, puis à souder la face ainsi métallisée de la pièce en ferrite sur la pièce métallique. Pour une description détaillée de ce procédé, on se reportera au brevet américain no 3 940 051 déposé le 8 octobre 1974.

Toutefois, un tel procédé par métallisation et soudage présente des inconvénients. En effet, le dépôt de métaux en couche mince et effectué à haute température, ce qui tend à détériorer les angles de perte diélectrique et magnétique, et par conséquent à augmenter les pertes d'insertion du dispositif hyperfréquence. De plus, l'emploi d'un métal tel que l'or augmente notablement le coût de fabrication du dispositif.

La présente invention a pour but de remédier à ces inconvénients en proposant un dispositif hyperfréquence à ferrites pour lequel les moyens utilisés pour la fixation de chaque pièce en ferrite sur une pièce métallique satisfont aux exigences précitées, sont simples et peu coûteux à réaliser, et sont entièrement satisfaisants du point de vue niveau de puissance que peut supporter le dispositif hyperfréquence.

A cet effet, l'invention a pour objet un dispositif hyperfréquence comportant deux pièces en ferrite fixées respectivement sur deux pièces métalliques dont chacune constitue la pièce polaire d'un aimant servant à polariser chaque pièce en ferrite, caractérisé en ce que la face de chaque pièce en ferrite destinée à être fixée sur sa pièce métallique correspondante est métallisée par un dépôt de métal non résistif, et en ce que la face métallisée de chaque pièce en ferrite est collée sur la pièce métallique par une couche de colle conductrice de la chaleur, assurant ainsi la fixation de chaque pièce en ferrite sur sa pièce métallique correspondante.

On comprend qu'ainsi le dépôt d'un métal non résistif, tel que par exemple de l'aluminium, jouera le rôle de barrière métallique pour les hyperfréquences, ce qui permettra de na pas augmenter les pertes à la surface de chaque pièce en ferrite. Dès lors, on pourra utiliser, pour la fixation, tout type de colle bonne conductrice thermiquement, même très mauvaise au point de vue perte d'insertion en hyperfréquence.

L'invention vise également une utilisation du dispositif hyperfréquence à ferrites selon l'invention.

D'autres caractéristiques et avantages de l'invention apparaîtront mieux dans la description détaillée qui suit et se réfère aux dessins annexés, donnés uniquement à titre d'exemple, et dans lesquels:

– la figure 1 est une vue en coupe d'une pièce en ferrite fixée sur une pièce métallique selon l'invention; et
– la figure 2 est une vue en coupe d'un circulateur hyperfréquence à jonction Y à trois portes, dont chaque pièce en ferrite est fixée sur une pièce polaire conformément à la figure 1.

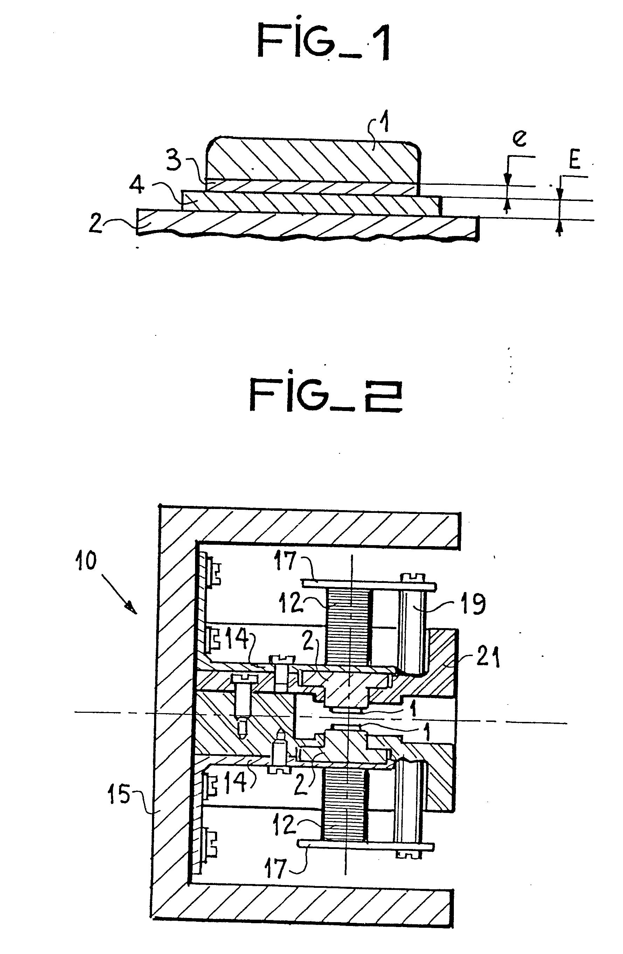

Suivant un exemple de réalisation, et en se reportant à la figure 1, on a représenté en 1 une pièce réalisée en ferrite appartenant soit à la classe des ferrites doux, soit à la classe des ferrites pour hyperfréquences, et destinée à être fixée sur une pièce métallique 2.

Cette pièce métallique 2 constitue, comme on le verra à propos de la figure 2, l'une des pièces polaires du circuit de polarisation magnétique d'un dispositif hyperfréquence, tel que par exemple un circulateur à jonction Y à trois portes, comportant deux pièces en ferrite en forme de disque mince sur chacune desquelles est fixée la pièce polaire conformément à l'invention.

Plus précisément, sur la figure 1, la fixation de la pièce en ferrite 1 sur la pièce métallique 2 selon l'invention consiste tout d'abord en un dépôt mince 3 d'un métal non résistif, c'est-à-dire un métal n'introduisant pas de résistance dans la pièce en ferrite, tel que par exemple l'aluminium ou le cuivre, sans sous-couche d'accrochage, sur la face de fixation de la pièce en ferrite 1. Ce dépôt de métal non résistif peut être réalisé par pulvérisation cathodique de type triode, ou par tout autre procédé de dépôt direct dudit métal, sans sortir du cadre de l'invention.

L'épaisseur e du dépôt 3 du métal non résistif est relativement épaisse, comprise entre 5 et 10 μm selon les fréquences, constituant ainsi une véritable barrière métallique pour les hyperfréquences.

La fixation selon l'invention consiste ensuite en un collage 4 de la face ainsi métallisée de la pièce en ferrite 1 sur la pièce métallique 2 à l'aide d'une colle bonne conductrice de la chaleur et polymérisant en faible épaisseur, telle que par exemple de l'araldite (marque déposée) chargée par de l'argent en poudre. Le dépôt de cette colle conductrice thermiquement est réalisé en couche mince dont l'épaisseur E est de l'ordre de 0,03 millimètre.

Ainsi, lors de la réalisation d'un dispositif hyperfréquence à ferrites et de forte puissance, la fixation de la pièce en ferrite 1 sur la pièce métallique 2, par métallisation 3 et collage 4, permet d'obtenir entre ces deux pièces une résistance thermique qui est aussi faible que celle obtenue avec d'autres procédés classiques, et qui permet avantageusement de ne pas augmenter les pertes d'insertion de la pièce en ferrite.

Les moyens de fixation décrits précédemment peuvent être mis en œuvre pour tout dispositif hyperfréquence comprenant des pièces en ferrite.

Comme dispositif hyperfréquence à ferrites, on citera à titre non limitatif le circulateur de puissance à jonction Y à trois portes, le déphaseur pour duplexeur de puissance à quatre voies, et le déphaseur rémanent de puissance.

La figure 2, dans laquelle les éléments identiques à ceux de la figure 1 sont désignés par le même repère, représente en coupe un circulateur hyperfréquence 10 de puissance à jonction Y à trois portes.

Ce circulateur 10, réalisé au moyen de tronçons de guides d'onde, comporte deux pièces 1 en ferrite pour hyperfréquences, telles que par exemple en ferrite de lithium, constituées chacune par un disque mince, et disposées en regard l'une de l'autre.

Chaque disque en ferrite 1 est fixé sur une pièce métallique 2 par mise en œuvre des moyens décrits en référence à la figure 1. Plus précisément, chaque pièce métallique 2 constitue la pièce polaire, par exemple en fer doux, d'un aimant permanent 12 servant à polariser chaque ferrite. Une pièce thermique d'adaptation 14, par exemple en cuivre, est interposée entre chaque pièce polaire 2 et chaque aimant 12, et est rendue solidaire, par tout système de fixation approprié, d'un élément dissipatif de la chaleur, constitué par exemple par un radiateur extérieur 15. Une culasse 17, par exemple en fer doux, solidaire de chaque aimant 12, et des colonnes métalliques, dont l'une est représentée en 19 sur la figure 2, assurent la fermeture du circuit magnétique de polarisation de chaque ferrite. On a représenté en 21 la bride de l'un des tronçons de guides d'onde constituant le circulateur 10.

A titre illustratif, la demanderesse a fabriqué un circulateur hyperfréquence de puissance à jonction Y à trois portes, fonctionnant dans la bande de fréquences comprise entre 14 et 14,5 GHz, et comprenant deux disques en ferrite de lithium. La puissance nominale admise par ce circulateur est égale à 750 Watt et les pertes d'insertion du circulateur sont de l'ordre de 0,08 dB dans la bande de fréquences considérée. En outre, les essais réalisés ont montré que ce circulateur à ferrites fixés sur les pièces polaires conformément à l'invention, a pu supporter sensiblement quatre fois plus de puissance qu'un circulateur dont les ferrites sont simplement collés sur les pièces polaires.

## Revendications

1. Dispositif hyperfréquence comportant deux pièces en ferrite (1) fixées respectivement sur deux pièces métalliques (2) dont chacune constitue la pièce polaire d'un aimant (12) servant à polariser chaque pièce en ferrite, caractérisé en ce que la face de chaque pièce en ferrite (1) destinée à être fixée sur sa pièce métallique (2) correspondante est métallisée par un dépôt (3) de métal non résistif, et en ce que la face métallisée de chaque pièce en ferrite (1) est collée sur la pièce métallique (2) par une couche (4) de colle conductrice de la chaleur, assurant ainsi la fixation de chaque pièce en ferrite sur sa pièce métallique correspondante.

2. Dispositif selon la revendication 1, caractérisé en ce que le dépôt (3) de métal non résistif a une épaisseur (e) comprise entre 5 et 10 μm.

3. Dispositif selon l'une des revendications 1 ou 2, caractérisé en ce que le métal non résistif est de l'aluminium.

4. Dispositif selon l'une des revendications 1 à 3, caractérisé en ce que la couche (4) de colle conductrice de la chaleur est une couche mince d'épaisseur (E) de l'ordre de 0,03 millimètre.

5. Dispositif selon l'une des revendications précédentes, caractérisé en ce que chaque pièce en ferrite (1) est un ferrite de lithium.

6. Utilisation d'un dispositif hyperfréquence selon l'une des revendications précédentes, caractérisée en ce que, pour deux pièces en ferrite disposées en regard l'une de l'autre et constituées chacune par un disque, le dispositif constitue un circulateur (10) de puissance à trois portes réalisées en guides d'onde.

## Patentansprüche

1. Hyperfrequenzvorrichtung mit zwei an je einem von zwei Metallteilen (2) befestigten Ferritteilen (1), wobei jedes Metallteil das Polstück eines jeden Ferritteil polarisierenden Magneten (12) bildet, dadurch gekennzeichnet, dass die an dem jeweilig entsprechenden Metallteil (2) zu befestigende Oberfläche jedes Ferritteils (1) mit einem widerstandslosen Metallüberzug (3) versehen ist, und dass die so metallisierte Oberfläche jedes Ferritteils (1) auf den Metallteil (2) vermittels einer wärmeleitenden Kleberschicht (4) aufgeklebt ist, wodurch die Befestigung jedes Ferritteils an dem entsprechenden Metallteil gesichert ist.

2. Vorrichtung nach Anspruch 1, dadurch gekennzeichnet, dass der widerstandslose Metallüberzug eine Dicke (e) von 5 bis 10 μm besitzt.

3. Vorrichtung nach einem der Ansprüche 1 und 2, dadurch gekennzeichnet, dass das widerstandslose Metall Aluminium ist.

4. Vorrichtung nach einem der Ansprüche 1 bis 3, dadurch gekennzeichnet, dass die wärmeleitende Kleberschicht (4) eine dünne Schicht mit einer Dicke (E) von etwa 0,03 mm ist.

5. Vorrichtung nach einem der vorstehenden Ansprüche, dadurch gekennzeichnet, dass jeder Ferritteil aus Lithiumferrit besteht.

6. Anwendung einer Hyperfrequenzvorrichtung nach einem der vorstehenden Ansprüche, dadurch gekennzeichnet, dass bei Vorliegen zweier einander gegenüberliegenden angeordneter Ferritteile, die aus je einer Scheibe bestehen, die Vorrichtung einen Kraftzirkulator (10) mit drei als Wellenleiter ausgebildeten Gattern bildet.

## Claims

1. A hyperfrequency device comprising two ferrite elements (1) fixed respectively onto two metallic elements (2) each of which constitutes the pole piece of a magnet (12) adapted to polarize each ferrite element, characterized in that the face of each ferrite element (1) which is to be fixed to the corresponding metallic element (2) is metallized with a layer (3) of non-resistive metal, and in that the metallized face of each ferrite element (1) is glued onto the metallic element (2) by means of a layer (4) of heat-conducting adhesive, thus ensuring the fixing of each ferrite element on the corresponding metallic element.

2. A device according to claim 1, characterized in that the non-resistive metal (3) has thickness (e) comprised between 5 and 10 μm.

3. A device according to any one of claims 1 and 2, characterized in that the non-resistive metal is aluminium.

4. A device according to any one of claims 1 to 3, characterized in that the layer (4) of heat-conducting adhesive is a thin layer having a thickness (E) of about 0,03 mm.

5. A device according to any one of the preceding claims characterized in that each ferrite element (1) is constituted by lithium ferrite.

6. An application of a hyperfrequency device according to any one of the preceding claims, characterized in that, two ferrite elements being disposed opposite to each other and constituted each by a disc, said device constitutes a power circulator (10) having three gates in the form of wave guides.

# FIG_1

# FIG_2